# EUROPEAN PATENT SPECIFICATION

(11) **EP 2 110 533 B1**
(45) Date of publication and mention of the grant of the patent: **23.06.2010**
(21) Application number: 08103586.7
(22) Date of filing: 17.04.2008
(51) Int. Cl.: F02D 35/02, F02D 41/24, F02D 41/40

(54) **A pilot electronic control unit and a method to derive optimized look up tables**
Elektronische Pilotsteuereinheit und Verfahren zum Ableiten optimierter Verweistabellen
Unité de commande électronique de pilote et procédé pour dériver des tables de recherche optimisées

(43) Date of publication of application: 21.10.2009
(73) Proprietor: ROBERT BOSCH GMBH, 70442 Stuttgart (DE)
(72) Inventor: Schumacher, Herbert, 70839, Gerlingen (DE); Kessler, Michael, 71287 Weissach (DE); Kern, Christoph, 71546 Aspach (DE); Kessler, michael, 71287 Weissach (DE)

(56) References cited:
- EP-A- 1 164 271
- EP-A- 1 496 237
- EP-A- 1 746 278
- EP-A- 1 905 989
- WO-A-02/095191
- DE-A1-102006 004 738
- FR-A- 2 886 729
- US-B1- 6 978 666

## Description

### State of the Art

The invention relates to the field of electronic control units used for controlling the combustion engines.

There are different types of devices and methods in use to optimize the look up tables used for combustion control in combustion engines.

The patent US 6,964,257 discloses an electronic control unit which is a closed loop control device and is present in every engine to optimize the combustion process.

The document EP 1905989A2 discloses an engine control system which measures the cylinder pressure of a combustion engine and computes combustion parameters. The combustion parameters computed by the system may be transferred to the engine control module or to a laptop computer for control, display or data logging purpose.

### Advantages of the invention

The device and method according to the independent patent claims have the below mentioned advantages:
The pilot electronic control unit provides an efficient and fast method of deriving optimized look up tables which can be subsequently transferred to standard ECUs used in mass production of vehicles.

Further improvements and/or advantages are realised by the features of the dependent patent claims.
The pilot electronic control unit also keeps track of the operating ranges of the combustion engines covered for optimizing. The vehicle fitted with the pilot ECU needs to be driven under vast operating ranges of the engine, so that the look up tables are optimised for major operating ranges, for example, up to full load condition and up to full speed condition of the combustion engine and under different ambient conditions as ambient temperature and pressue.

The transfer of the optimized look up tables from a pilot ECU to an external device and then to the standard ECUs is achieved through known techniques without needing any special devices or methods.

### Brief descriptions of the drawings

- Figure 1: shows the schematic view of a pilot ECU along with the combustion engine.
- Figure 2: shows the graphs of the pressure and the heat generated
- Figure 3: shows the schematic view of a pilot ECU along with an external device
- Figure 4: shows the schematic view of a standard ECU along with an external device

### Description of the embodiments

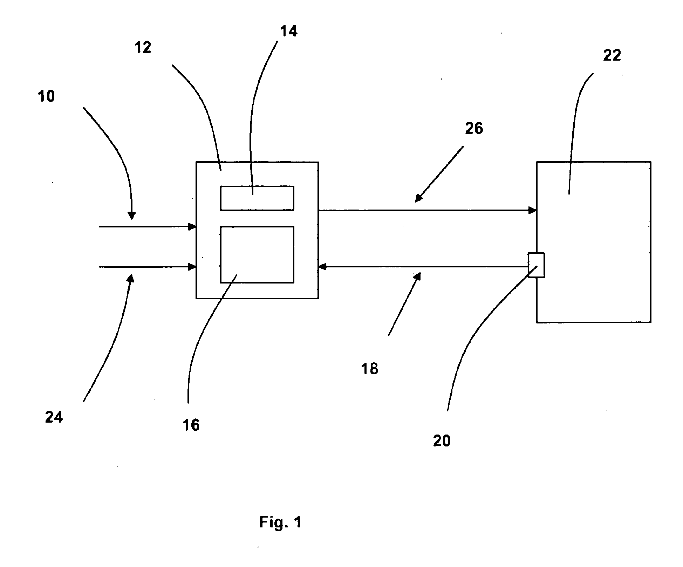

The figure 1 shows schematic view of a pilot ECU along with the combustion engine.

Calibration of look up tables used for controlling the combustion inside a combustion engine is a vital part during the application or testing phase of an ECU. The ECUs generate control signals to the combustion engines based on a set of input parameters and a set of look up tables.

As the requirements are increasing with respect to emission quality and the efficiency of the engine, the combustion process needs to be controlled more accurately. This results in more and more data in the look up tables and need more and more effort and time to calibrate the look up tables. For some of the engines the number of variables in the look up tables goes up to 14,000. The effort and time required to calibrate such a high number of variables for different operating conditions of the combustion engine, is huge.

Monitoring the combustion inside a combustion chamber of a combustion engine via a pressure sensor is known in the state of the art. The data received from the pressure sensor is analysed using thermodynamic evaluation and the result of the analysis is used to control the combustion accurately in the combustion engine.

Shown in the Fig. 1 is a schematic view of a pilot ECU 12 along with a combustion engine 22. The pilot ECU 12 consists of a microcontroller based hardware, a set of control algorithms 14, a set of look up tables 16, a connection to read pressure data 18 coming from a pressure sensor 20 placed inside the combustion chamber of the combustion engine 22, an angle signal 24 coming from an angle sensor which is not shown. The pilot ECU 12 has a set of input signals 10 receiving inputs from various sources and a set of control signals 26 connected to the combustion engine.

The pressure sensor 20 delivers the pressure data to the pilot ECU 12, which characterizes the pressure in the combustion chamber of the combustion engine 22. The angle sensor which is preferably situated on the crankshaft of the engine delivers a high resolution angle signal 24 characterizing the angular position of the crankshaft. Alternatively the angle sensor may also be situated on the camshaft of the engine. The pressure data 18 and the angle signal 24 are provided to the control algorithms 14 in the pilot ECU 12. Also provided to the control algorithms 14 are the input signals 10 which may be include operating conditions of the engine like engine speed, engine load, engine temperature etc. Also the input signals 10 include some of the external parameters like air temperature, air pressure, water content in the air etc. The control algorithms process all the parameters and generate a set of control signals 26. The control signals may include activation signals for injection duration and/or start of injection. An injection cycle is normally divided into plurality of partial injections. Normally at least one pilot injection, one main injection and at least one post injection are provided as partial injections. The control signal 26 may include activation signal for injection duration and/or start of injection for at least one of the partial injections.

Also the control algorithms 14 may influence other parameters of the engine which are not shown in the figure, for example boost pressure, amount of air supplied to the engine, exhaust gas recirculation, rail pressure and/or injection pressure etc.

The control algorithms 14 process the pressure signal 18 and the angular signal 24. Applying the principles of thermodynamics the combustion curve or the heating curve is computed with the aid of the pressure signal, caloric content of fuel and engine geometry. The analysis of the heating curve provides information to control the combustion optimally.

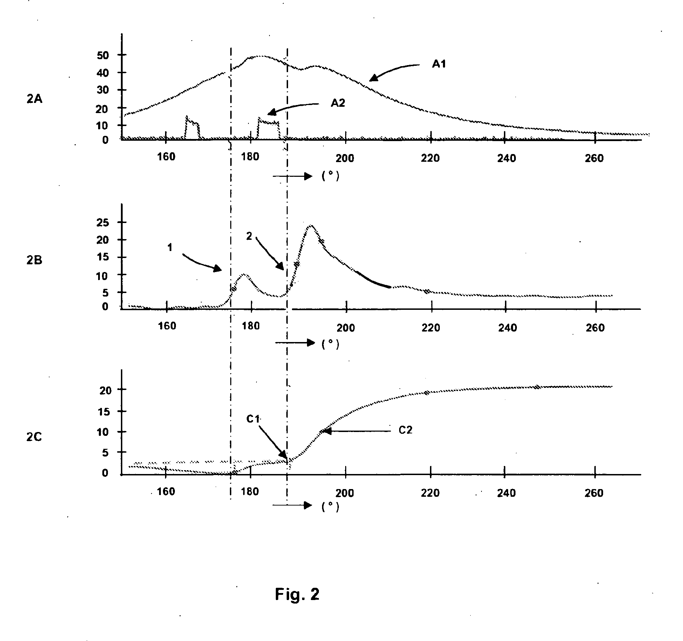

Fig. 2 shows different graphs of the combustion process.

Shown in Fig 2A are 2 graphs: A1 is the graph of pressure in the combustion chamber, X axis representing the crank shaft angle in degrees and Y axis representing the pressure in bars. The curve is plotted based on the pressure data 18 read from the pressure sensor 20 and the angle signal 24.

A2 is the graph of an injector signal, X axis representing the crank shaft angle in degrees and Y axis representing the current supplied to the injector valves. The 2 pulses of the injector signal A2 represent 2 injections, the smaller pulse for the pilot injection and the wider pulse for the main injection.

It is seen from the graphs that as the crank angle increases the two injections take place and the pressure in the combustion chamber increases till after some time of the main injection. After reaching the peak value the pressure starts decreasing because of the power stroke of the piston.

Shown in Fig. 2B is a graph of rate of heat released which is computed with the aid of pressure data. The X axis represents crank shaft angle and Y axis represents the heat release rate, for example in Joules per degree of the crank shaft angle. The two lines 1 and 2 indicate start of a pilot combustion and start of a main combustion respectively.

The procedure is explained with below examples. The procedure is not however limited only to the examples. The procedure is explained with respect to desired heat in the combustion chamber and the actual heat in the combustion chamber as the pressure in the combustion chamber has a direct relationship with the heat released in the chamber.

A set point value for injection amount is pre-stored in the look up tables as a function of different operating conditions of the engine such as load and speed. The conversion factor to convert the injection amount into a heat amount is also available in the look up tables. Using the conversion factor and the injection amount, the set point value of heat which is desired in the combustion chamber is computed.

The control algorithms also compute the actual heat from the pressure data 18 delivered by the pressure sensor 20. The set point value of heat and the actual heat are compared. Based on the difference between the set point value of the heat and the actual heat, the look up tables are updated to minimize the difference between the two and also the appropriate control signals are generated for activation of the injectors for subsequent cycles.

The amount of the injection or the activation time or the start of injection is controlled appropriately.

The same procedure is used for start of combustion. A set point value for start of combustion is pre-stored in the look up tables as a function of different operating conditions of the engine such as load and speed. The actual start of combustion is computed from the pressure data 18 delivered by the pressure sensor 20. The set point value for start of combustion and the actual value of start of combustion are compared. Based on the difference between the two, the look up tables are updated to minimize the difference between the two. The start of injection is adjusted appropriately for the subsequent cycles.

Shown in Fig. 2C is a graph of integrated heat released which is computed with the aid of pressure data. The X axis represents crank shaft angle and Y axis represents the integrated heat released, for example in Joules. The point C1 represents the heat release of a pilot combustion and the point C2 represents 50% mass fraction burned.

The amount of heat generated characterizes the injection mass, delay in the start of injection, duration of the injection etc. and the heat amounts are compared against the set points of the heat. The difference between the set point and the actual heat generated is supplied to the control algorithms 14 to optimize the look up tables for the subsequent cycles of the combustion.

The analysis is used to control various features of the combustion engine 22 like pilot injection, start of combustion, mass fraction burned, torque, maximum cylinder pressure, correction of exhaust gas recirculation etc.

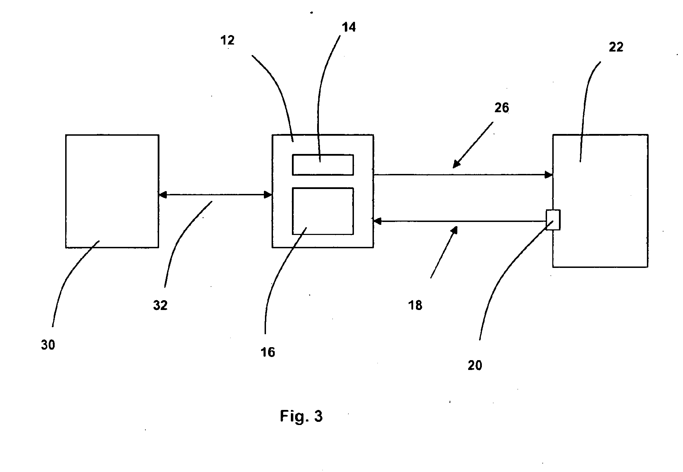

Fig. 3 shows a schematic view of a pilot ECU along with an external device 30 used for transfer of look up tables.

Here all the components shown in Fig. 1 remain same. The external device 30 is connected to the pilot ECU 12 through the lines 32. When the pilot ECU 12 has optimised the look up tables for major ranges of operations of the combustion engine, the optimised look up tables 14 are transferred to an external device 30 using a pre-defined data transfer protocol.

Once the look up tables are available in the external device, the look up tables are copied onto standard ECUs which are mass produced and used in mass production of the vehicles.

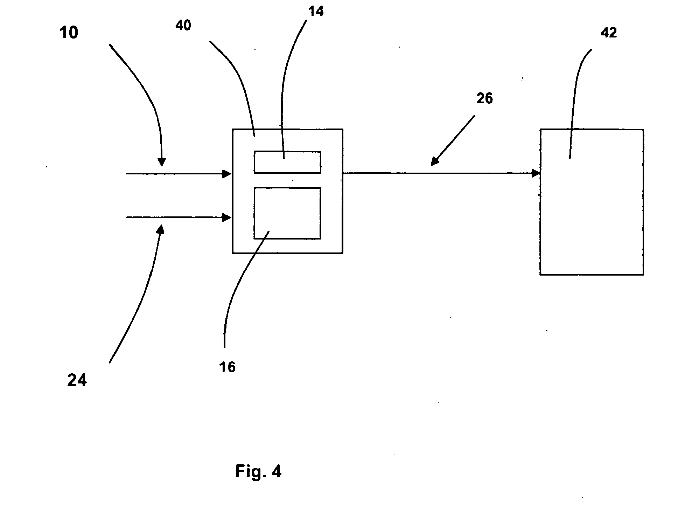

Fig. 4 shows a schematic view of a standard ECU 40. Here all the components shown in Fig. 1 remain same except the combustion engine 42 and the ECU 40. The difference in the combustion engine 42 and the ECU 40 compared to the pilot ECU 12 and the combustion engine 22 in earlier schematics is that there is no pressure sensor in the combustion chamber of the combustion engine 42.

The combustion engine 42 and the standard ECU 40 operate in an open loop mode as there is no feedback about the pressure in the combustion chamber. As all the look up tables 16 are already optimised for different operating conditions of a similar combustion engine, the combustion process will be working optimally.

## Claims

1. A pilot electronic control unit ECU (12) adapted to receive pressure sensor data from a pressure sensor (20) in the combustion chamber of a combustion engine (22), **characterised in that**
- the pilot ECU (12) is fitted in a pilot vehicle
- the pilot ECU (12) forming a closed control loop using operating conditions of the engine and look up tables (16) to calculate control signals for the combustion engine to realise a desired pressure in the combustion chamber
- the pilot ECU (12) comparing the desired pressure with the measured pressure and optimising the look up tables (16) to minimize the difference between desired and measured pressure while the vehicle is being driven under different operating conditions to cover the ranges up to full engine load and up to full speed of the engine
- the pilot ECU (12) is adapted to keep track of the operating ranges of the combustion engine covered for optimizing.
- the pilot ECU (12) is adapted to transfer the look up tables (16) to an external device.

2. The pilot electronic control unit (12) according to claim 1 wherein the pilot ECU (12) transfers the look up tables to other standard ECUs (40) for mass production using an external device (30).

3. A method to derive optimised look up tables (16) for electronic control units used to control combustion engines, comprising the steps of
- using a pilot electronic control unit (12) fitted in a pilot vehicle and capable of using data from a pressure sensor in a combustion chamber of a combustion engine and closed control loops, to optimise a set of look up tables (16) of the combustion engine
- operating the pilot vehicle in such a way that the pilot electronic control unit (12) covers major parts of the operating range of the engine, i.e. range up to full speed and range up to full engine load
- transferring the optimised look up tables (16) from the pilot electronic control unit (12) to an external device (30)
- transferring the optimised look up tables (16) from the external device to a plurality of standard electronic control units (40)
- installing the plurality of standard electronic control units (40) in a plurality of vehicles produced under mass production.

## Patentansprüche

1. Elektronische Piloteinheit ECU (12), die zum Empfang von Drucksensordaten von einem Drucksensor (20) in der Brennkammer eines Verbrennungsmotors (22) ausgelegt ist, **dadurch gekennzeichnet, dass**
- die Pilot-ECU (12) in einem Pilotfahrzeug angebracht ist,
- die Pilot-ECU (12) eine geschlossene Regelschleife unter Verwendung von Betriebsbedingungen des Motors und Nachschlagetabellen (16) zur Berechnung von Steuersignalen für den Verbrennungsmotor zur Realisierung eines Solldrucks in der Brennkammer bildet,
- die Pilot-ECU (12) den gewünschten Druck mit dem gemessenen Druck vergleicht und die Nachschlagetabellen (16) optimiert, um die Differenz zwischen Solldruck und gemessenem Druck zu minimieren, während das Fahrzeug unter verschiedenen Betriebsbedingungen gefahren wird, um die Bereiche bis zu voller Motorlast und bis zu voller Drehzahl des Motors zu umfassen,
- die Pilot-ECU (12) dazu ausgelegt ist, die zur Optimierung umfassten Betriebsbereiche des Verbrennungsmotor zu beobachten,
- die Pilot-ECU (12) dazu ausgelegt ist, die Nachschlagetabellen (16) auf eine externe Vorrichtung zu übertragen.

2. Elektronische Piloteinheit (12) nach Anspruch 1, wobei die Pilot-ECU (12) die Nachschlagetabellen zu anderen Standard-ECUs (40) zur Massenfertigung unter Verwendung einer externen Vorrichtung (30) überträgt.

3. Verfahren zum Ableiten optimierter Nachschlagetabellen (16) für elektronische Steuereinheiten, die zur Steuerung von Verbrennungsmotoren verwendet werden, mit den folgenden Schritten:
- Verwenden einer elektronischen Piloteinheit (12), die in einem Pilotfahrzeug angebracht ist und Daten von einem Drucksensor in einer Brennkammer eines Verbrennungsmotor und geschlossenen Regelkreisen verwenden kann, um einen Satz von Nachschlagetabellen (16) des Verbrennungsmotor zu optimierten,
- Betreiben des Pilotfahrzeugs derart, dass die elektronische Piloteinheit (12) große Teile des Betriebsbereichs des Motors, das heißt einen Bereich bis zur voller Drehzahl und einen Bereich bis zur vollen Motorlast, mit umfasst,
- Übertragen der optimierten Nachschlagetabellen (16) von der elektronischen Piloteinheit (12) auf eine externe Vorrichtung (30),
- Übertragen der optimierten Nachschlagetabellen (16) von der externen Vorrichtung auf mehrere elektronische Standard-Steuereinheiten (40),
- Installieren der mehreren elektronischen Standard-Steuereinheiten (40) in mehreren Fahrzeugen, die mit Massenfertigung gefertigt werden.

## Revendications

1. Unité de commande électronique ECU pilote (12) conçue pour recevoir des données de capteur de pression en provenance d'un capteur de pression (20) dans une chambre de combustion d'un moteur à combustion (22), ladite unité de commande électronique ECU pilote (12) étant **caractérisée en ce que** :
- elle est embarquée dans un véhicule pilote ;
- elle forme une boucle d'asservissement fermée utilisant des conditions de fonctionnement du moteur et des tables de recherche (16) pour calculer des signaux de commande destinés au moteur à combustion dans le but d'obtenir une pression souhaitée dans la chambre de combustion ;
- elle compare la pression souhaitée à la pression mesurée et optimise les tables de recherche (16) dans le but de minimiser la différence entre la pression souhaitée et la pression mesurée pendant la conduite du véhicule dans différentes conditions de fonctionnement de manière à couvrir les régimes allant jusqu'à la pleine charge du moteur et jusqu'à la vitesse maximale du moteur ;
- elle est conçue pour assurer le suivi des régimes de fonctionnement du moteur à combustion couverts pour l'optimisation ;
- elle est conçue pour transférer les tables de recherche (16) sur un dispositif externe.

2. Unité de commande électronique pilote ECU (12) selon la revendication 1, ladite unité de commande électronique ECU pilote (12) transférant les tables de recherche sur d'autres unités de commande électroniques ECU standard (40) utilisées pour la fabrication en série, à l'aide d'un dispositif externe (30).

3. Procédé d'obtention de tables de recherche (16) optimisées pour des unités de commande électroniques utilisées pour commander des moteurs à combustion, ledit procédé comprenant les étapes consistant à :
- utiliser une unité de commande électronique pilote (12) embarquée dans un véhicule pilote et capable d'utiliser des données provenant d'un capteur de pression dans une chambre de combustion d'un moteur à combustion et de boucles d'asservissement fermée dans le but d'optimiser un ensemble de tables de recherche (16) du moteur à combustion ;
- faire fonctionner le véhicule pilote de manière à ce que l'unité de commande électronique pilote (12) couvre une majorité des régimes de fonctionnement du moteur, autrement dit le régime allant jusqu'à la vitesse maximale du moteur et le régime allant jusqu'à la pleine charge du moteur ;
- transférer les tables de recherche (16) optimisées de l'unité de commande électronique pilote (12) sur un dispositif externe (30) ;
- transférer les tables de recherche (16) optimisées du dispositif externe sur une pluralité d'unités de commande électroniques standard (40) ;
- installer la pluralité d'unités de commande électronique standard (40) dans une pluralité de véhicules fabriqués en série.
